# EUROPEAN PATENT APPLICATION

(11) **EP 1 513 362 A2**
(43) Date of publication of application: **09.03.2005**
(21) Application number: 04012489.3
(22) Date of filing: 26.05.2004
(51) Int. Cl.: H04Q 7/38

(54) **Mobile communication terminal and method for implementing differentiated functions according to user classes**

(30) Priority: 08.09.2003 KR 2003062828
(71) Applicant: Samsung Electronics Co., Ltd., Suwon-si, Gyeonggi-do (KR)
(72) Inventor: Han, Jae-Byeong, Yeongtong-gu Suwon-si Gyeonggi-do (KR)
(74) Representative: Grünecker, Kinkeldey, Stockmair & Schwanhäusser Anwaltssozietät

(57) **Abstract**

A mobile communication terminal and a method for differentially implementing functions according to a class of a user. The method comprises steps of: setting conditions for selecting respective functions in order to differentially implement each function according to the class of the user; activating only menus for selecting a function or functions available to the user when the preset conditions are met; informing the user of any change in at least one function available to the user due to a change of the user's class; and applying the change in at least one function available to the user to the mobile communication terminal. Since functions included in a mobile communication terminal are implemented restrictively or supplementarily according to the class of a user, the present invention facilitates the management of users of mobile communication terminals based on their classes.

## Description

The present invention relates generally to a mobile communication terminal, and more particularly to a mobile communication terminal and a method for implementing differentiated functions according to user classes.

As a result of the development of mobile communication technologies, mobile terminals have been widely supplied and developed to offer various mobile communication services. Mobile communication terminals are available for a wide range of applications and becoming more integrated with various additional functions, such as alarm clock, morning call, scheduler, game, karaoke and multimedia functions than the previous mobile telephones. More particularly, wireless LANs have enabled users to access web sites using mobile terminals and download various information (for example, still photographs, moving pictures, and MP3 files).

With the increasing use of mobile terminals, people of varying ages, including young children and students, use a variety of functions on their mobile terminals. Accordingly, it has become necessary to implement functions of a mobile terminal differentially according to user classes i.e., ages, credit ratings, etc.

In the prior art, mobile service providers classify users as good or bad by credit rating or payment of usage fee, in order to offer differentiated services (for example, differentiated discount rates and free coupons) according to the user classes. However, embedded functions of a mobile terminal are equally available to all users. In other words, while the mobile service providers provide their subscribers with services differentiated according to the credit ratings or usage fees, they have no way to provide differentiated services or limit the implementation of functions available on a mobile terminal according to the ages of the subscribers.

Accordingly, the present invention has been designed to solve the above and other problems occurring in the prior art.

It is the object of the present invention to provide a method for implementing functions of a mobile communication terminal restrictively or supplementarily according to user classes (such as credit ratings and ages).

This object is solved by the subject matter of the independent claims.

Preferred embodiments are defined in the dependent claims.

In order to achieve the above, there is provided a mobile communication terminal for differentially implementing at least one function according to a class of a user, comprising: a memory for storing preset conditions for selecting respective functions in order to differentially implement each function according to the class of the user; and a control section for activating only a function or functions open to selection by the user when a particular condition stored in the memory is met. The control section detects any change in the class of the user. If there is a change in at least one function of a mobile terminal available to the user due to a change in the user's class, the control section should preferably inform the user of the change in the available function or functions, and apply the change to the mobile terminal.

Additionally, there is also provided a method for differentially implementing functions of a mobile communication terminal according to a class of a user, comprising: setting conditions for selecting respective functions in order to differentially implement each function according to the class of the user; activating menus for selecting a function or functions available to the user when the preset conditions are met; informing the user of any change in at least one function available to the user due to a change of the user's class; and applying the change in the at least one function available to the user to the mobile communication terminal.

The above features and advantages of the present invention will be more apparent from the following detailed description taken in conjunction with the accompanying drawings, in which:
FIG. 1 is a flow chart illustrating a process of providing users of mobile communication terminals with differentiated functions according to a first embodiment of the present invention.
FIG. 2 is a flow chart illustrating a process of providing users of mobile communication terminals with differentiated functions according to a second embodiment of the present invention.
FIG. 3 is a block diagram schematically illustrating a mobile communication terminal capable of implementing differentiated functions according to the first and second embodiments of the present invention.
FIG. 4 illustrates an example of a function management database for implementing differentiated functions according to the first and second embodiments of the present invention.
FIGs. 5A to 5C illustrate examples of menus and messages displayed on a mobile communication terminal to implement differentiated functions according to the first embodiment of the present invention.
FIGs. 6A to 6D illustrate examples of menus and messages displayed on a mobile communication terminal to implement differentiated functions according to the second embodiment of the present invention.

Preferred embodiments of the present invention will be described in detail herein below with reference to the accompanying drawings. Additionally, in the following description of the present invention, a detailed description of known functions and configurations incorporated herein will be omitted when it may make the subject matter of the present invention rather unclear.

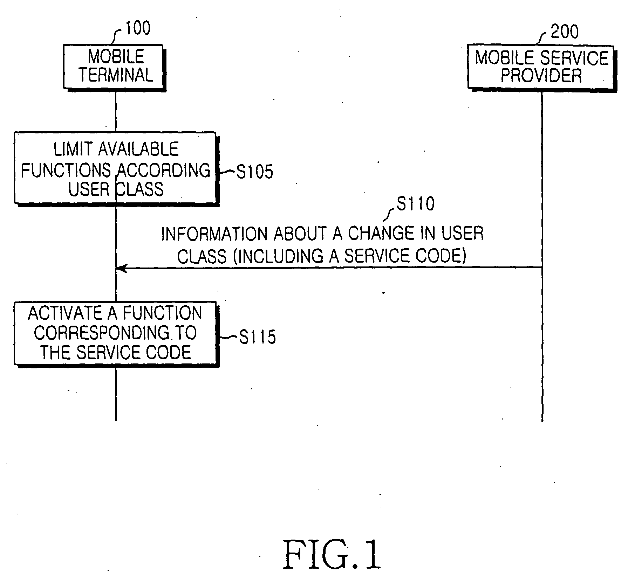

FIG. 1 is a flow chart illustrating a process of providing users of mobile communication terminals with differentiated functions according to the first embodiment of the present invention. More specifically, FIG. 1 illustrates operations performed by a mobile communication terminal 100 and a mobile service provider 200.

Referring to FIG. 1, the mobile terminal 100 stores information about functions available according to a class of the user (for example, credit rating or age of the user) in order to provide the user with a differentiated function according to the first embodiment of the present invention (S105). In other words, the mobile terminal 100 presets conditions for selecting respective functions in order to differentially implement each function according to the class of the user. The mobile terminal 100 is set to activate only menus for selecting the functions available to the user thereof based on the preset conditions. For example, if a game is available only to persons aged 18 or over, the mobile terminal 100 prohibits persons under 18 from selecting the game by deactivating a menu for selecting the game.

If the class of the user has been changed, resulting in a change in at least one function available to the user, the mobile terminal 100 will inform the user of the change in the available function or functions and apply the change to the mobile terminal 100. For example, when receiving information about a change in the class of the user (for example, service accessibility rating) from the mobile service provider 200 (S110), the mobile terminal 100 identifies functions to which the change is applied based on the received information. If, because the change in the user's class, the user is allowed to select a function which has not been available before the change, the mobile terminal 100 will activate the function (S115). That is, the mobile terminal 100 will activate a menu for selecting the function. If the change in the user's class prohibits the user to select a function, which had been available before the change, the mobile terminal 100 will cancel the activation of the function by deactivating a menu for selecting the function.

When sending information about a change in the class of the user, the mobile service provider 200 preferably includes, in that information, service codes corresponding to the functions of which availability will be changed due to the change in the user's class, thereby enabling the mobile terminal 100 to identify the corresponding functions.

Although FIG. 1 illustrates that the mobile terminal 100 receives information about a change in the class of a user from the mobile service provider 200 and applies a resulting change in available functions, the mobile terminal 100 itself can manage the information about any change in the user's class. More specifically, information managed by the mobile service provider 200, such as credit rating of a user, should be provided by the mobile service provider 200. However, information, such as the age of the user, and any change in that information can be managed by the mobile terminal 100 itself.

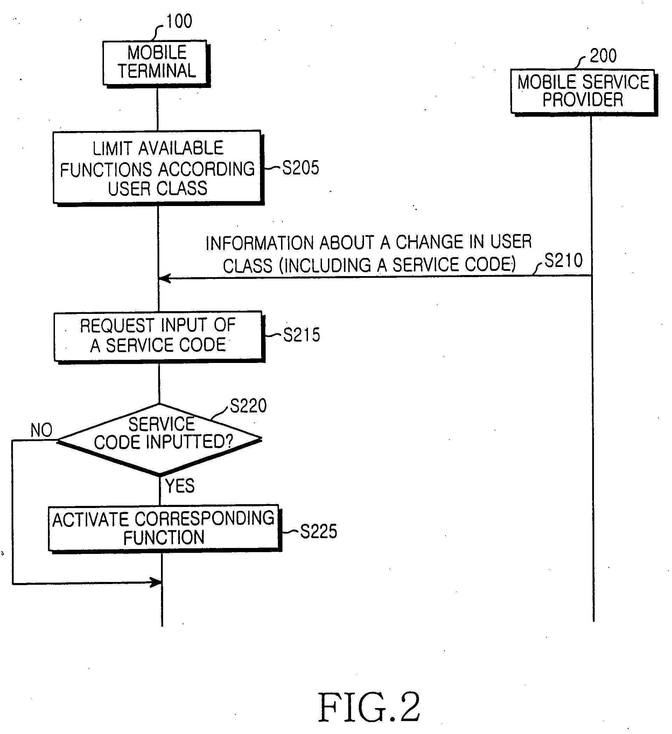

FIG. 2 is a flow chart illustrating a process of providing users of mobile communication terminals with differentiated functions according to the second embodiment of the present invention. Referring to FIG. 2, the mobile terminal 100 limits the available functions according to the user class in step S205 and is informed of a change in the class of the user from the mobile service provider 200 (S210). At the same time, the mobile terminal 100 receives information about a service code for the function of which availability will be changed due to the change in the user's class. Subsequently, the mobile terminal 100 requests the user to input the service code (S215). When the user inputs the service code in response to the request (S220), the mobile terminal 100 activates the corresponding function (S225). Because steps S205 and 210 in FIG. 2 are similar to steps S105 and S110 in FIG. 1, a detailed explanation of S205 and S210 will not be repeated.

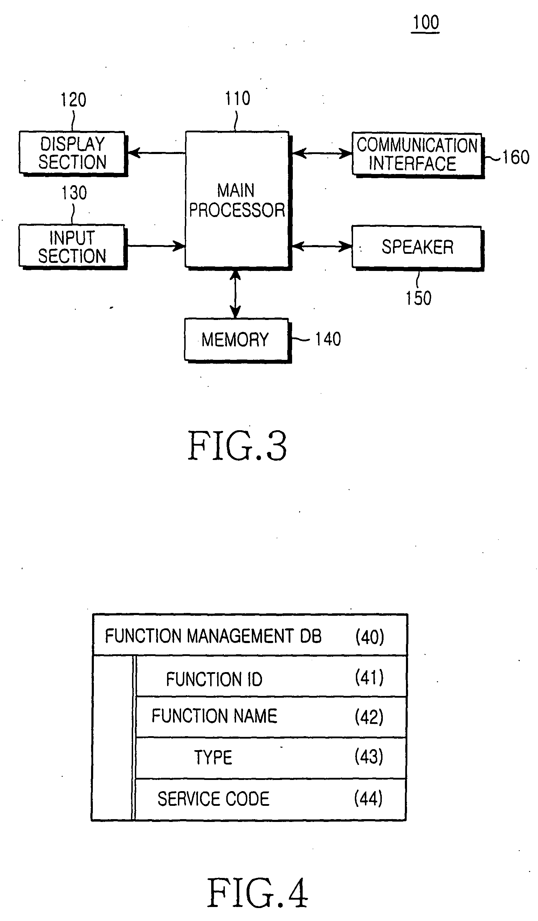

FIG. 3 is a block diagram schematically illustrating the mobile communication terminal 100 capable of implementing differentiated functions according to the first and second embodiments of the present invention. Referring to FIG. 3, the mobile terminal 100 includes a main processor 110, a display section 120, an input section 130, a memory 140, a speaker 150, and a communication interface 160. For ease of description, elements generally included in a mobile terminal, for example, a microphone, an antenna, etc., are not depicted in this drawing.

The display section 120 displays the operational state and control command input state of the mobile terminal 100 under the control of the main -processor 110. The input section 130 inputs a control command generated from an operation signal of the user to the main processor 110. The speaker 150 outputs a speech signal under the control of the main processor 110. The communication interface 160 controls the data receiving/transmission under the control of the main processor 110. Of course, the display section 120, input section 130, speaker 150, and communication interface 160 may perform additional operations generally required to operate the mobile terminal 100.

The memory 140 stores various information necessary for the operation of the mobile terminal 100. In particular, the memory 140 stores preset conditions for selecting respective functions in order to differentially implementing each function according to the class of the user.

The main processor 110 controls each element of the mobile terminal 100 to activate only a function or functions available to the user based on the preset conditions stored in the memory 140.

FIG. 4 illustrates an example of a function management database 40 included in the memory 140. Referring to FIG. 4, the function management database 40 contains information including a function ID 41 representing a unique number assigned to each function carried out by the mobile terminal 100, a function name 42, a function type 43 for indicating a condition for selecting each function, and a service code 44 corresponding to each function.

The main processor 110 detects any changes in the class of the user based on the information about the user's class stored in the memory 140 or the information about the change of the user's class received through the communication interface 160. If there is a change in functions available to the user due to the change in the user's class, the main processor 110 will inform the user of the change in the available functions and apply the change to the mobile terminal. Preferably, the mobile service provider 200 sends the user of the mobile terminal 100 information about the change of the user's class in form of a text message through the communication interface 160. Additionally, the text message preferably includes service codes corresponding to the functions of which availability will be changed due to the change in the user's class.

Upon receiving information about the change of the user class, the main processor 110 identifies the functions of which availability will be changed, and determines whether to change the availability of the functions. If, as a result of the change in the user's class, the user is allowed to select a function, which has not been available before the change, the main processor 110 will activate a menu for selecting the function. However, if the change in the user's class prohibits the user from selecting a function that had been available before the change, the main processor 110 will cancel the activation of the function by deactivating a menu for selecting the function. More specifically, when the user is allowed to select a function, which had not been open to selection before due to the change in the user's class, the main processor 110 performs further steps of requesting the user to input a service code corresponding to the function and receiving the service code input by the user in response to the request.

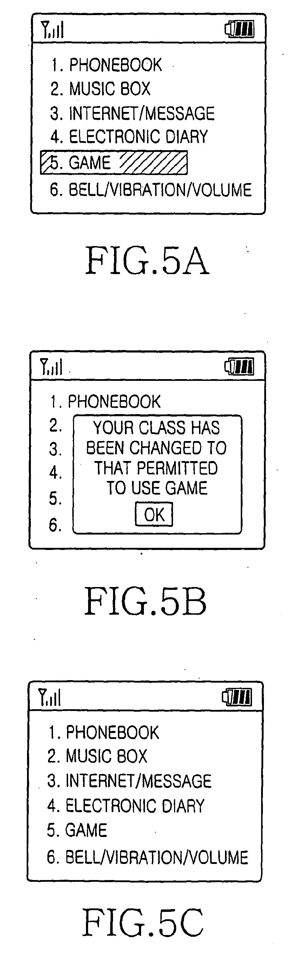

FIGs. 5A to 5C illustrate examples of menus and messages displayed on the mobile terminal 100 to implement differentiated functions according to the first embodiment of the present invention. FIG. 5A is an example of a picture illustrating that function "5. game" among the function menus displayed on the mobile terminal is not open to selection by the user. FIG. 5B illustrates a message informing the user that the function "5. game" becomes open to selection when the user's class has changed to the class that meets a preset condition. FIG. 5C is an example of a picture illustrating that the function "5. game" is now open to selection by the user.

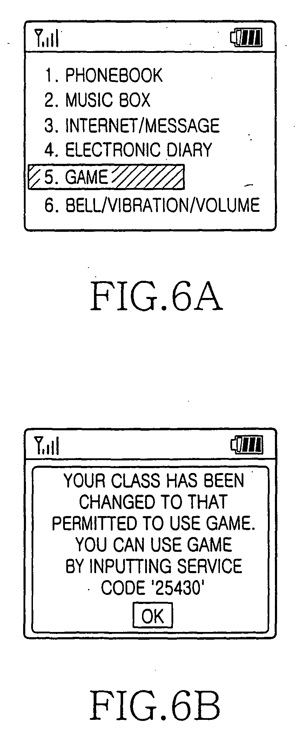

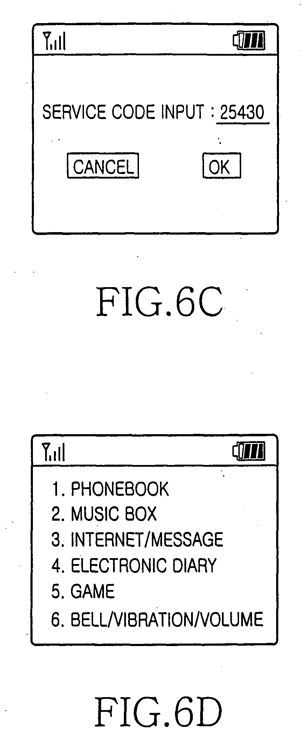

FIGs. 6A to 6D illustrate examples of menus and messages displayed on the mobile terminal 100 to implement differentiated functions according to the second embodiment of the present invention. More specifically, FIG. 6A is an example of a picture illustrating that a function "5. game" among the function menus displayed on the mobile terminal is not open to selection by the user, and FIG. 6B illustrates a message informing the user that the function "5. game" becomes open to selection due to a change in the class of the user, and simultaneously requesting the user to input a corresponding service code. FIG. 6C is an example of a picture displayed when the user inputs the service code, and FIG. 6D is an example of a picture illustrating that the function "5. game" is now open to selection by the user. According to the second embodiment of the present invention as illustrated in FIGs. 6A to 6D, it is possible to delay the activation of the menu for selecting the function, which has become open to selection due to the change in the user's class. In other words, the menu for selecting the function will not be activated until and unless the user inputs the requested service code.

Because functions included in a mobile communication terminal are implemented restrictively or supplementarily according to the class of a user (for example, credit rating or age of the user), the present invention facilitates the management of users of mobile communication terminals based on their classes. The present invention not only provides the users of mobile terminals with differentiated services and functions according to their classes, but also restricts the use of certain functions to give a warning to a user. For example, if a person who uses a number of data services often defaults on his payments, the data services will be restricted to that person to warn him. Also, if a game that can be implemented on a mobile terminal is not suitable for certain ages, an age limit can be set to inhibit those in the certain ages from not using the game.

Although preferred embodiments of the present invention have been described for illustrative purposes, those skilled in the art will appreciate that various modifications, additions, and substitutions are possible, without departing from the scope of the invention as disclosed in the accompanying claims.

## Claims

1. A method for differentially implementing functions of a mobile communication terminal according to a class of a user, comprising the steps of:
setting at least one condition for selecting at least one function in order to differentially implement the at least one function according to the class of the user;
activating a menu for selecting the at least one function available to the user when the at least one preset condition is met;
informing the user of a change in the at least one function available to the user after a change of the user's class; and
applying the change in the at least one function available to the user to the mobile communication terminal.

2. The method according to claim 1, wherein the step of informing the user comprises receiving a text message indicating the change in the class of the user from a mobile service provider.

3. The method according to claim 2, wherein said text message includes a service code corresponding to the at least one function that changes due to the change in the class of the user.

4. The method according to one of claims 1 to 3, wherein the step of applying the change in the at least one function comprises activating a menu for selecting the at least one function that becomes available due to the change in the class of the user.

5. The method according to claim 4, wherein the step of applying the change in the at least one function comprises further comprises:
requesting the user to input a service code corresponding to the at least one function that becomes available due to the change in the class of the user; and
receiving the service code input by the user in response to the request.

6. The method according to one of claims 1 to 3, wherein the step of applying the change in the at least one function comprises deactivating of a menu for selecting the at least one function that becomes unavailable due to the change in the class of the user.

7. A mobile communication terminal for differentially implementing at least one function according to a class of a user, comprising:
a memory for storing at least one preset condition for selecting the at least one function in order to differentially implement the at least one function according to the class of the user; and
a control section for activating the at least one function available to the user when the at least one condition stored in the memory is met.

8. The mobile communication terminal according to claim 7, wherein said memory stores information including at least one of a function identification representing a unique number assigned to the at least one function, a function name, a function type showing the at least one condition for selecting the at least one function, and a service code corresponding to the at least one function.

9. The mobile communication terminal according to claim 7 or 8, wherein said control section detects a change in the class of the user and, if there is a change in the at least one function available to the user due to the change in the user's class, informs the user of the change in the at least one function and applies the change to the mobile communication terminal.

10. The mobile communication terminal according to claim 9, wherein said control section receives a text message indicating the change in the class of the user from a mobile service provider and detects the change in the class of the user.

11. The mobile communication terminal according to claim 10, wherein said text message includes a service code corresponding to the at least one function.

12. The mobile communication terminal according to claim 9, wherein said control section activates a menu for selecting the at least one function that becomes available due to the change in the class of the user.

13. The mobile communication terminal according to claim 12, wherein said control section requests the user to input a service code corresponding to the at least one function that becomes available due to the change in the class of the user and receives the service code input by the user in response to the request.

14. The mobile communication terminal according to claim 9, wherein said control section deactivates a menu for selecting the at least one function that becomes unavailable due to the change in the class of the user.
